# EUROPEAN PATENT APPLICATION

(11) **EP 4 827 045 A1**
(43) Date of publication of application: **21.10.2026**
(21) Application number: 24904035.3
(22) Date of filing: 20.11.2024
(51) Int. Cl.: H04L 9/40, H04L 9/08, H04L 9/32

(54) **METHOD FOR SECURE COMMUNICATION USING PLANET, AND ENTITY TERMINAL USING SAME**

(30) Priority: 14.12.2023 KR 20230182110
(71) Applicant: Lee, Junghoon, Seoul 05649 (KR)
(72) Inventor: CHOI, Jong Wook, Incheon 22361 (KR); LEE, Junghoon, Seoul 05649 (KR)
(74) Representative: AWA Sweden AB
(86) International application number: PCT/KR2024/018384
(87) International publication number: WO 2025/127469

(57) **Abstract**

The present invention comprises: generating and storing, by a first entity terminal, a first planet token that rotates, according to first current rotation condition information, around a first current rotation axis of a first planet, at a first current time at which a communication connection request is acquired from a second entity terminal, and that has a first planet token address generated by referring to the first current time and first current location information of a specific point at the first current time; if first predicted state information is acquired, at a second current time of accessing the first planet token, from the second entity terminal by predicting a state in which the first planet token has rotated according to the first current rotation condition information during an elapsed time from the first current time to the second current time, comparing the first predicted state information with first reference state information corresponding to the state of the first planet token at the second current time; and generating a secure communication channel between the first entity terminal and the second entity terminal by using the first planet token.

## Description

### FIELD OF THE DISCLOSURE

The present disclosure relates to a method for security communication between entity terminals. More specifically, the present disclosure relates to a method for performing security communication between entity terminals using a virtual planet, and to entity terminals utilizing the same.

### BACKGROUND OF THE DISCLOSURE

Recently, in the field of Internet-based communication technologies, new communication technologies such as cloud/grid computing, P2P (Person-to-Person), and M2M (Machine-to-Machine) have emerged, in addition to voice communication. These new communication technologies have been developed with a focus not only on a data transmission speed, but also in particular on a security of communication channels formed between terminals.

Generally, data transmitted through the communication channels is encrypted for security purposes, making it difficult to convert the data back to its original form even if the data is leaked to unspecified parties. These data encryption methods involve either rearranging the original data using algorithms based on specified functions or applying predetermined permutations to the original data. Various methods are used for this purpose, and representative examples include block cipher modes such as DES (Data Encryption Standard), FEAL (Fast Data Encipherment Algorithm), and AES (Advanced Encryption Standard), as well as Pseudo-Random Number Addition Type Cryptography.

Further, since these encryption algorithms use security keys when encrypting and decrypting the original data, the terminals connected via the communication channels must share the security keys. For example, there is a method that utilizes a public key infrastructure (PKI).

However, because conventional methods simply exchange the security keys, the fixed key values and data are exposed whenever the communications are hacked. Also, since the key exchange methods are fixed within the clients' internal codes, the conventional methods have a fundamental limitation of being inevitably hacked with infinite given time.

In addition, conventional methods have a disadvantage of performing complex process for sharing the security keys.

Therefore, the applicant proposes a method that simplifies the process of sharing the security keys and fundamentally prevents hacking.

### DETAILED EXPLANATION OF THE DISCLOSURE

### OBJECTS OF THE INVENTION

It is an object of the present disclosure to solve all the aforementioned problems.

It is another object of the present disclosure to provide a method for security communication, which uses location information of a planet rotating in real-time after a specific time as a security key, to thereby simplify a process of sharing the security key.

It is still another object of the present disclosure to provide a method for security communication, which uses the security key corresponding to a key value that changes in real-time according to the location information of the planet rotating in real-time after the specific time, to thereby fundamentally block hacking regardless of time conditions.

### MEANS OF SOLVING THE PROBLEM

In order to accomplish objects above and characteristic effects to be described later of the present disclosure, distinctive structures of the present disclosure are described as follows.

In accordance with one aspect of the present disclosure, there is provided a method for security communication using a planet, comprising steps of: (a) in response to acquiring a communication connection request from a second entity terminal, (i) checking, by a first entity terminal, a first planet stored in the first terminal, wherein the first planet is generated by using a specific point that is randomly selected from a spatial coordinate system, wherein the first planet rotates according to initial rotation condition information that is randomly selected based on an initial axis of rotation for the first planet randomly selected from the spatial coordinate system, wherein a first planet address set for the first planet is generated by referring to an initial time when the first planet was generated and initial location information that includes at least one of an initial longitude, an initial latitude, and an initial azimuth of the specific point corresponding to the initial axis of rotation for the first planet at the initial time, (ii) changing, by the first entity terminal, the initial axis of rotation for the first planet to a first current axis of rotation for the first planet, randomly selected at a first current time when the communication connection request is acquired, by referring to the first planet stored in the first entity terminal, to thereby allow the first planet to rotate according to first current rotation condition information which is randomly selected based on the first current axis of rotation for the first planet, (iii) generating and storing, by the first entity terminal, a first planet token having a first planet token address generated by referring to the first current time and first current location information which includes at least one of a first current longitude, a first current latitude, and a first current azimuth of the specific point corresponding to the first current axis of rotation for the first planet at the first current time, and (iv) transmitting, by the first entity terminal, the first planet token address, the first current time, the first current location information and the first current rotation condition information to the second entity terminal; and (b) in response to acquiring first predicted status information from the second entity terminal at a second current time, wherein the second current time is when the first planet token address is used for accessing the first planet token, and wherein the first predicted status information is acquired based on the first current time, the first current location information and the first current rotation condition information by predicting a rotated status of the first planet token according to the first current rotation condition information during a time period from the first current time to the second current time, (i) comparing, by the first entity terminal, first reference status information with the first predicted status information, wherein the first reference status information corresponds to a status of the first planet token at the second current time, and (ii) in case the first reference status information and the first predicted status information are identical, generating, by the first entity terminal, a security communication channel between the first entity terminal and the second entity terminal by using the first planet token.

As one example, at the step of (b), the first predicted status information includes a second predicted hash value, wherein the second predicted hash value is acquired by applying a hashing operation to the second current time and second predicted current location information, and wherein the second predicted current location information contains at least one of a second predicted current longitude, a second predicted current latitude and a second predicted current azimuth corresponding to the specific point of the first planet token rotated according to the first current rotation condition information during a time period from the first current time to the second current time, wherein the first entity terminal (i) generates a second reference hash value, wherein the second reference hash value is acquired by applying a hashing operation to the second current time and second reference current location information, and wherein the second reference current location information contains at least one of a second reference current longitude, a second reference current latitude and a second reference current azimuth corresponding to the specific point of the first planet token at the second current time, and (ii) in case the second reference hash value and the second predicted hash value are identical, generates the security communication channel between the first entity terminal and the second entity terminal.

As one example, the initial time, the first current time and the second current time are respectively acquired from a Unix time.

As one example, at the step of (a), the first entity terminal generates the first planet token with an active time set, and allows the first planet token to be expired when the active time has elapsed.

As one example, the method further comprises a step of: (c) in case the first planet token is expired before the active time has elapsed, generating, by the first entity terminal, the first planet token corresponding to the first current time, the first current location information and the first current rotation condition information from the first planet at a third current time, and then allowing the first planet token to rotate according to the first current rotation condition information during a time period from the first current time to the third current time to thereby regenerate and store the first planet token.

As one example, the method further comprises a step of: (d) in response to acquiring validity check request information of the first planet token at a fourth current time, generating, by the first entity terminal, a first reference planet token corresponding to the first current time, the first current location information and the first current rotation condition information from the first planet, and then checking, by the first entity terminal, whether the first reference planet token that is acquired by rotating the first reference planet token according to the first current rotation condition information during a time period from the first current time to the fourth current time and the first planet token stored at the fourth current time are identical, to thereby check a validity of the first planet token.

As one example, the initial rotation condition information or the first current rotation condition information respectively includes at least one of first rotation condition information and second rotation condition information, wherein the first rotation condition information is related to a horizontal direction of rotation for the first planet or the first planet token, wherein the first planet or the first planet token rotates around the initial axis of rotation for the first planet or around the first current axis of rotation for the first planet token, and wherein the second rotation condition information is related to a vertical direction perpendicular to the horizontal direction.

As one example, the first entity terminal generates the security communication channel between the first entity terminal and the second entity terminal through a peer-to-peer network.

In accordance with another aspect of the present disclosure, there is provided a method for security communication using a planet, comprising steps of: (a) in response to acquiring a communication connection request from a second entity terminal, (i) checking, by a first entity terminal, a first planet stored in the first terminal, wherein the first planet is generated by using a specific point that is randomly selected from a spatial coordinate system, wherein the first planet rotates according to initial rotation condition information that is randomly selected based on an initial axis of rotation for the first planet randomly selected from the spatial coordinate system, wherein a first planet address set for the first planet is generated by referring to an initial time when the first planet was generated and initial location information that includes at least one of an initial longitude, an initial latitude, and an initial azimuth of the specific point corresponding to the initial axis of rotation for the first planet at the initial time, (ii) changing, by the first entity terminal, the initial axis of rotation for the first planet to a first current axis of rotation for the first planet, randomly selected at a (1_1)-th current time when the communication connection request is acquired, by referring to the first planet stored in the first entity terminal, to thereby allow the first planet to rotate according to (1_1)-th current rotation condition information which is randomly selected based on the first current axis of rotation for the first planet, (iii) generating and storing, by the first entity terminal, a first planet token having a (1_1)-th planet token address generated by referring to the (1_1)-th current time and (1_1)-th current location information which includes at least one of a (1_1)-th current longitude, a (1_1)-th current latitude, and a (1_1)-th current azimuth of the specific point corresponding to the first current axis of rotation for the first planet at the (1_1)-th current time, and (iv) transmitting, by the first entity terminal, the (1_1)-th planet token address, the (1_1)-th current time, the (1_1)-th current location information and the (1_1)-th current rotation condition information to the second entity terminal; (b) in response to acquiring (1_1)-th predicted status information from the second entity terminal at a (2_1)-th current time, wherein the (2_1)-th current time is when the (1_1)-th planet token address is used for accessing the first planet token, and wherein the (1_1)-th predicted status information is acquired based on the (1_1)-th current time, the (1_1)-th current location information and the (1_1)-th current rotation condition information by predicting a rotated status of the first planet token according to the (1_1)-th current rotation condition information during a time period from the (1_1)-th current time to the (2_1)-th current time, (i) comparing, by the first entity terminal, (1_1)-th reference status information with the (1_1)-th predicted status information, wherein the (1_1)-th reference status information corresponds to a status of the first planet token at the (2_1)-th current time, and (ii) in case the (1_1)-th reference status information and the (1_1)-th predicted status information are identical, requesting, by the first entity terminal, a communication connection to the second entity terminal; and (c) in response to acquiring a (1_2)-th planet token address, a (1_2)-th current time, (1_2)-th current location information and (1_2)-th current rotation condition information corresponding to a second planet token from the second entity terminal, (i) generating, by the first entity terminal, (1_2)-th predicted status information by predicting a rotated status of the second planet token according to the (1_2)-th current rotation condition information during a time period from the (1_2)-th current time to the (2_2)-th current time by referring to the (1_2)-th current time, the (1_2)-th current location information and the (1_2)-th current rotation condition information at the (2_2)-th current time, (ii) transmitting, by the first entity terminal, the (1_2)-th predicted status information to the second entity terminal by using the (1_2)-th planet token address, to thereby allow the second entity terminal to compare (1_2)-th reference status information with the (1_2)-th predicted status information, wherein the (1_2)-th reference status information corresponds to a status of the second planet token at the (2_2)-th current time, and to check whether the (1_2)-th reference status information and the (1_2)-th predicted status information are identical, and (iii) in case the (1_2)-th reference status information and the (1_2)-th predicted status information are checked as identical on the second entity terminal, generating, by the first entity terminal, a security communication channel between the first entity terminal and the second entity terminal by using the first planet token and the second planet token.

As an example, at the step of (b), the (1_1)-th predicted status information includes a second predicted hash value, wherein the second predicted hash value is acquired by applying a hashing operation to the (2_1)-th current time and second predicted current location information, and wherein the second predicted current location information contains at least one of a second predicted current longitude, a second predicted current latitude and a second predicted current azimuth corresponding to the specific point of the first planet token rotated according to the (1_1)-th current rotation condition information during a time period from the (1_1)-th current time to the (2_1)-th current time, wherein the first entity terminal (i) generates a second reference hash value, wherein the second reference hash value is acquired by applying a hashing operation to the (2_1)-th current time and second reference current location information, and wherein the second reference current location information contains at least one of a second reference current longitude, a second reference current latitude and a second reference current azimuth corresponding to the specific point of the first planet token at the (2_1)-th current time, and (ii) checks whether the (1_1)-th reference status information and the (1_1)-th predicted status information are identical by checking whether the second reference hash value and the second predicted hash value are identical.

As one example, the initial rotation condition information or the (1_1)-th current rotation condition information respectively includes at least one of first rotation condition information and second rotation condition information, wherein the first rotation condition information is related to a horizontal direction of rotation for the first planet or the first planet token, wherein the first planet or the first planet token rotates around the initial axis of rotation for the first planet or around the first current axis of rotation for the first planet token and wherein the second rotation condition information is related to a vertical direction perpendicular to the horizontal direction.

In accordance with still another aspect of the present disclosure, there is provided a An entity terminal for executing security communication using a planet, comprising: at least one memory that stores instructions for executing the security communication using the planet; and at least one processor configured to execute the security communication using the planet according to the instructions stored in the memory to perform processes of: (I) in response to acquiring a communication connection request from an another entity terminal, (i) checking a first planet stored in the first terminal, wherein the first planet is generated by using a specific point that is randomly selected from a spatial coordinate system, wherein the first planet rotates according to initial rotation condition information that is randomly selected based on an initial axis of rotation for the first planet randomly selected from the spatial coordinate system, wherein a first planet address set for the first planet is generated by referring to an initial time when the first planet was generated and initial location information that includes at least one of an initial longitude, an initial latitude, and an initial azimuth of the specific point corresponding to the initial axis of rotation for the first planet at the initial time, (ii) changing the initial axis of rotation for the first planet to a first current axis of rotation for the first planet, randomly selected at a first current time when the communication connection request is acquired, by referring to the first planet stored in the entity terminal, to thereby allow the first planet to rotate according to first current rotation condition information which is randomly selected based on the first current axis of rotation for the first planet, (iii) generating and storing a first planet token having a first planet token address generated by referring to the first current time and first current location information which includes at least one of a first current longitude, a first current latitude, and a first current azimuth of the specific point corresponding to the first current axis of rotation for the first planet at the first current time, and (iv) transmitting the first planet token address, the first current time, the first current location information and the first current rotation condition information to the another entity terminal; and (II) in response to acquiring first predicted status information from the another entity terminal at a second current time, wherein the second current time is when the first planet token address is used for accessing the first planet token, and wherein the first predicted status information is acquired based on the first current time, the first current location information and the first current rotation condition information by predicting a rotated status of the first planet token according to the first current rotation condition information during a time period from the first current time to the second current time, (i) comparing first reference status information with the first predicted status information, wherein the first reference status information corresponds to a status of the first planet token at the second current time, and (ii) in case the first reference status information and the first predicted status information are identical, generating a security communication channel between the entity terminal and the another entity terminal by using the first planet token.

As one example, the first predicted status information includes a second predicted hash value, wherein the second predicted hash value is acquired by applying a hashing operation to the second current time and second predicted current location information, and wherein the second predicted current location information contains at least one of a second predicted current longitude, a second predicted current latitude and a second predicted current azimuth corresponding to the specific point of the first planet token rotated according to the first current rotation condition information during a time period from the first current time to the second current time, wherein, at the process of (II), the processor (i) generates a second reference hash value, wherein the second reference hash value is acquired by applying a hashing operation to the second current time and second reference current location information, and wherein the second reference current location information contains at least one of a second reference current longitude, a second reference current latitude and a second reference current azimuth corresponding to the specific point of the first planet token at the second current time, and (ii) in case the second reference hash value and the second predicted hash value are identical, generates the security communication channel between the entity terminal and the another entity terminal.

As one example, the initial time, the first current time and the second current time are respectively acquired from a Unix time.

As one example, at the process of (I), the processor generates the first planet token with an active time set, and allows the first planet token to be expired when the active time has elapsed.

As one example, the processor further executes a process of: (III) in case the first planet token is expired before the active time has elapsed, generating the first planet token corresponding to the first current time, the first current location information and the first current rotation condition information from the first planet at a third current time, and then allowing the first planet token to rotate according to the first current rotation condition information during a time period from the first current time to the third current time to thereby regenerate and store the first planet token.

As one example, the processor further executes a process of: (IV) in response to acquiring validity check request information of the first planet token at a fourth current time, generating a first reference planet token corresponding to the first current time, the first current location information and the first current rotation condition information from the first planet, and then checking whether the first reference planet token that is acquired by rotating the first reference planet token according to the first current rotation condition information during a time period from the first current time to the fourth current time and the first planet token stored at the fourth current time are identical, to thereby check a validity of the first planet token.

As one example, the initial rotation condition information or the first current rotation condition information respectively includes at least one of first rotation condition information and second rotation condition information, wherein the first rotation condition information is related to a horizontal direction of rotation for the first planet or the first planet token, wherein the first planet or the first planet token rotates around the initial axis of rotation for the first planet or around the first current axis of rotation for the first planet token, and wherein the second rotation condition information is related to a vertical direction perpendicular to the horizontal direction.

As one example, the processor generates the security communication channel between the entity terminal and the another entity terminal through a peer-to-peer network.

In accordance with still yet another aspect of the present disclosure, there is provided an entity terminal for executing security communication using a planet, comprising: at least one memory that stores instructions for executing the security communication using the planet; and at least one processor configured to execute the security communication using the planet according to the instructions stored in the memory to perform processes of: (I) in response to acquiring a communication connection request from an another entity terminal, (i) checking a first planet stored in the first terminal, wherein the first planet is generated by using a specific point that is randomly selected from a spatial coordinate system, wherein the first planet rotates according to initial rotation condition information that is randomly selected based on an initial axis of rotation for the first planet randomly selected from the spatial coordinate system, wherein a first planet address set for the first planet is generated by referring to an initial time when the first planet was generated and initial location information that includes at least one of an initial longitude, an initial latitude, and an initial azimuth of the specific point corresponding to the initial axis of rotation for the first planet at the initial time, (ii) changing the initial axis of rotation for the first planet to a first current axis of rotation for the first planet, randomly selected at a (1_1)-th current time when the communication connection request is acquired, by referring to the first planet stored in the entity terminal, to thereby allow the first planet to rotate according to (1_1)-th current rotation condition information which is randomly selected based on the first current axis of rotation for the first planet, (iii) generating and storing a first planet token having a (1_1)-th planet token address generated by referring to the (1_1)-th current time and (1_1)-th current location information which includes at least one of a (1_1)-th current longitude, a (1_1)-th current latitude, and a (1_1)-th current azimuth of the specific point corresponding to the first current axis of rotation for the first planet at the (1_1)-th current time, and (iv) transmitting the (1_1)-th planet token address, the (1_1)-th current time, the (1_1)-th current location information and the (1_1)-th current rotation condition information to the another entity terminal; (II) in response to acquiring (1_1)-th predicted status information from the another entity terminal at a (2_1)-th current time, wherein the (2_1)-th current time is when the (1_1)-th planet token address is used for accessing the first planet token, and wherein the (1_1)-th predicted status information is acquired based on the (1_1)-th current time, the (1_1)-th current location information and the (1_1)-th current rotation condition information by predicting a rotated status of the first planet token according to the (1_1)-th current rotation condition information during a time period from the (1_1)-th current time to the (2_1)-th current time, (i) comparing (1_1)-th reference status information with the (1_1)-th predicted status information, wherein the (1_1)-th reference status information corresponds to a status of the first planet token at the (2_1)-th current time, and (ii) in case the (1_1)-th reference status information and the (1_1)-th predicted status information are identical, requesting a communication connection to the another entity terminal; and (III) in response to acquiring a (1_2)-th planet token address, a (1_2)-th current time, (1_2)-th current location information and (1_2)-th current rotation condition information corresponding to a second planet token, (i) generating (1_2)-th predicted status information by predicting a rotated status of the second planet token according to the (1_2)-th current rotation condition information during a time period from the (1_2)-th current time to the (2_2)-th current time by referring to the (1_2)-th current time, the (1_2)-th current location information and the (1_2)-th current rotation condition information at the (2_2)-th current time, (ii) transmitting the (1_2)-th predicted status information to the another entity terminal by using the (1_2)-th planet token address, to thereby allow the another entity terminal to compare (1_2)-th reference status information with the (1_2)-th predicted status information, wherein the (1_2)-th reference status information corresponds to a status of the second planet token at the (2_2)-th current time, and to check whether the (1_2)-th reference status information and the (1_2)-th predicted status information are identical, and (iii) in case the (1_2)-th reference status information and the (1_2)-th predicted status information are checked as identical on the another entity terminal, generating a security communication channel between the entity terminal and the another entity terminal by using the first planet token and the second planet token.

As one example, the (1_1)-th predicted status information includes a second predicted hash value, wherein the second predicted hash value is acquired by applying a hashing operation to the (2_1)-th current time and second predicted current location information, and wherein the second predicted current location information contains at least one of a second predicted current longitude, a second predicted current latitude and a second predicted current azimuth corresponding to the specific point of the first planet token rotated according to the (1_1)-th current rotation condition information during a time period from the (1_1)-th current time to the (2_1)-th current time, wherein, at the process of (II), the processor (i) generates a second reference hash value, wherein the second reference hash value is acquired by applying a hashing operation to the (2_1)-th current time and second reference current location information, and wherein the second reference current location information contains at least one of a second reference current longitude, a second reference current latitude and a second reference current azimuth corresponding to the specific point of the first planet token at the (2_1)-th current time, and (ii) checks whether the (1_1)-th reference status information and the (1_1)-th predicted status information are identical by checking whether the second reference hash value and the second predicted hash value are identical.

As one example, the initial rotation condition information or the (1_1)-th current rotation condition information respectively includes at least one of first rotation condition information and second rotation condition information, wherein the first rotation condition information is related to a horizontal direction of rotation for the first planet or the first planet token, wherein the first planet or the first planet token rotates around the initial axis of rotation for the first planet or around the first current axis of rotation for the first planet token and wherein the second rotation condition information is related to a vertical direction perpendicular to the horizontal direction.

In addition, a computer-readable recording medium for recording a computer program for executing the method of the present disclosure is further provided.

### EFFECTS OF THE INVENTION

The present disclosure has an effect of providing a method for security communication, which uses location information of a planet rotating in real-time after a specific time as a security key, to thereby simplify a process of sharing the security key.

The present disclosure has another effect of providing a method for security communication, which uses the security key corresponding to a key value that changes in real-time according to the location information of the planet rotating in real-time after the specific time, to thereby fundamentally block hacking regardless of time conditions.

### BRIEF DESCRIPTION OF THE DRAWINGS

The accompanying drawings used to explain example embodiments of the present disclosure are only part of example embodiments of the present disclosure and other drawings can be obtained based on the drawings by those skilled in the art of the present disclosure without inventive work.
Fig. 1 is a drawing schematically illustrating an entity terminal executing security communication using a planet in accordance with one example embodiment of the present disclosure.
Fig. 2 is a drawing schematically illustrating a method for security communication using the planet in accordance with one example embodiment of the present disclosure.
Fig. 3 is a drawing schematically illustrating a state of generating a first planet in the method for security communication using the planet in accordance with one example embodiment of the present disclosure.
Figs. 4A and 4B are drawings schematically illustrating states of generating a first planet token in the method for security communication using the planet in accordance with one example embodiment of the present disclosure.

### DETAILED DESCRIPTION OF THE PREFERRED EMBODIMENTS

In the following detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the present disclosure, although different, are not necessarily mutually exclusive. For example, a particular feature, structure, or characteristic described herein in connection with one embodiment may be implemented within other embodiments without departing from the spirit and scope of the present disclosure. In addition, it is to be understood that the position or arrangement of individual elements within each disclosed embodiment may be modified without departing from the spirit and scope of the present disclosure. The following detailed description is, therefore, not to be taken in a limiting sense, and the scope of the present disclosure is defined only by the appended claims, appropriately interpreted, along with the full range of equivalents to which the claims are entitled. In the drawings, like numerals refer to the same or similar functionality throughout the several views.

To allow those skilled in the art to carry out the present disclosure easily, the example embodiments of the present disclosure will be explained by referring to attached diagrams in detail as shown below.

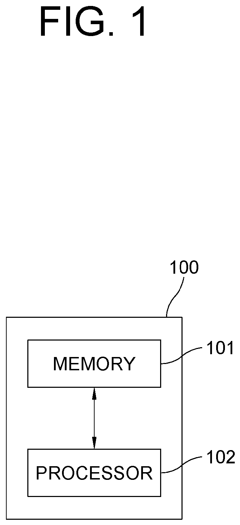

Fig. 1 is a drawing schematically illustrating an entity terminal executing security communication using a planet in accordance with one example embodiment of the present disclosure. As shown in Fig. 1, the entity terminal 100 may include a memory 101 that stores instructions for executing the security communication using the planet and a processor 102 configured to perform operations for executing the security communication using the planet according to the instructions stored in the memory 101.

Specifically, the entity terminal 100 may achieve a desired system performance by using combinations of at least one computing device and at least one computer software, e.g., a computer processor, a memory, a storage, an input device, an output device, or any other conventional computing components, an electronic communication device such as a router or a switch, an electronic information storage system such as a network-attached storage (NAS) device and a storage area network (SAN) as the computing device and any instructions that allow the computing device to function in a specific way as the computer software.

The processor of the computing device may include a hardware configuration of MPU (Micro Processing Unit) or CPU (Central Processing Unit), cache memory, data bus, etc. Additionally, the computing device may further include OS and software configuration of applications that achieve specific purposes.

However, a case in which the computing device includes an integrated processor having a medium, a processor and a memory therein for carrying out the present disclosure is not excluded.

Meanwhile, the processor 102 of the entity terminal 100, according to the instructions stored in the memory 101, may perform processes of: in response to acquiring a communication connection request from another entity terminal, (i) checking a first planet stored in the first terminal, (ii) changing the initial axis of rotation for the first planet to a first current axis of rotation for the first planet, randomly selected at a first current time when the communication connection request is acquired, by referring to the first planet stored in the entity terminal, to thereby allow the first planet to rotate according to first current rotation condition information which is randomly selected based on the first current axis of rotation for the first planet, (iii) generating and storing a first planet token having a first planet token address generated by referring to the first current time and first current location information which includes at least one of a first current longitude, a first current latitude, and a first current azimuth of the specific point corresponding to the first current axis of rotation for the first planet at the first current time, and (iv) transmitting the first planet token address, the first current time, the first current location information and the first current rotation condition information to the another entity terminal. Herein, the first planet may be generated by using a specific point that is randomly selected from a spatial coordinate system, wherein the first planet rotates according to initial rotation condition information that is randomly selected based on an initial axis of rotation for the first planet randomly selected from the spatial coordinate system, wherein a first planet address set for the first planet is generated by referring to an initial time when the first planet was generated and initial location information that includes at least one of an initial longitude, an initial latitude, and an initial azimuth of the specific point corresponding to the initial axis of rotation for the first planet at the initial time. Further, the processor 102 of the entity terminal 100 may perform processes of: in response to acquiring first predicted status information from the another entity terminal at a second current time, wherein the second current time is when the first planet token address is used for accessing the first planet token, and wherein the first predicted status information is acquired based on the first current time, the first current location information and the first current rotation condition information by predicting a rotated status of the first planet token according to the first current rotation condition information during a time period from the first current time to the second current time, (i) comparing first reference status information with the first predicted status information, wherein the first reference status information corresponds to a status of the first planet token at the second current time, and (ii) in case the first reference status information and the first predicted status information are identical, generating a security communication channel between the entity terminal and the another entity terminal by using the first planet token.

Additionally, the processor 102 of the entity terminal 100, according to the instructions stored in the memory 101, may perform processes of: in response to acquiring the communication connection request from the another entity terminal, (i) checking the first planet stored in the first terminal, (ii) changing the initial axis of rotation for the first planet to the first current axis of rotation for the first planet, randomly selected at a (1_1)-th current time when the communication connection request is acquired, by referring to the first planet stored in the entity terminal, to thereby allow the first planet to rotate according to (1_1)-th current rotation condition information which is randomly selected based on the first current axis of rotation for the first planet, (iii) generating and storing a first planet token having a (1_1)-th planet token address generated by referring to the (1_1)-th current time and (1_1)-th current location information which includes at least one of a (1_1)-th current longitude, a (1_1)-th current latitude, and a (1_1)-th current azimuth of the specific point corresponding to the first current axis of rotation for the first planet at the (1_1)-th current time, and (iv) transmitting the (1_1)-th planet token address, the (1_1)-th current time, the (1_1)-th current location information and the (1_1)-th current rotation condition information to the another entity terminal. Further, the processor 102 of the entity terminal 100 may perform processes of: in response to acquiring (1_1)-th predicted status information from the another entity terminal at a (2_1)-th current time, wherein the (2_1)-th current time is when the (1_1)-th planet token address is used for accessing the first planet token, and wherein the (1_1)-th predicted status information is acquired based on the (1_1)-th current time, the (1_1)-th current location information and the (1_1)-th current rotation condition information by predicting a rotated status of the first planet token according to the (1_1)-th current rotation condition information during a time period from the (1_1)-th current time to the (2_1)-th current time, (i) comparing (1_1)-th reference status information with the (1_1)-th predicted status information, wherein the (1_1)-th reference status information corresponds to a status of the first planet token at the (2_1)-th current time, and (ii) in case the (1_1)-th reference status information and the (1_1)-th predicted status information are identical, requesting a communication connection to the another entity terminal. Then, the processor 102 of the entity terminal 100 may perform processes of: in response to acquiring a (1_2)-th planet token address, a (1_2)-th current time, (1_2)-th current location information and (1_2)-th current rotation condition information corresponding to a second planet token, (i) generating (1_2)-th predicted status information by predicting a rotated status of the second planet token according to the (1_2)-th current rotation condition information during a time period from the (1_2)-th current time to the (2_2)-th current time by referring to the (1_2)-th current time, the (1_2)-th current location information and the (1_2)-th current rotation condition information at the (2_2)-th current time, (ii) transmitting the (1_2)-th predicted status information to the another entity terminal by using the (1_2)-th planet token address, to thereby allow the another entity terminal to compare (1_2)-th reference status information with the (1_2)-th predicted status information, wherein the (1_2)-th reference status information corresponds to a status of the second planet token at the (2_2)-th current time, and to check whether the (1_2)-th reference status information and the (1_2)-th predicted status information are identical, and (iii) in case the (1_2)-th reference status information and the (1_2)-th predicted status information are checked as identical on the another entity terminal, generating a security communication channel between the entity terminal and the another entity terminal by using the first planet token and the second planet token.

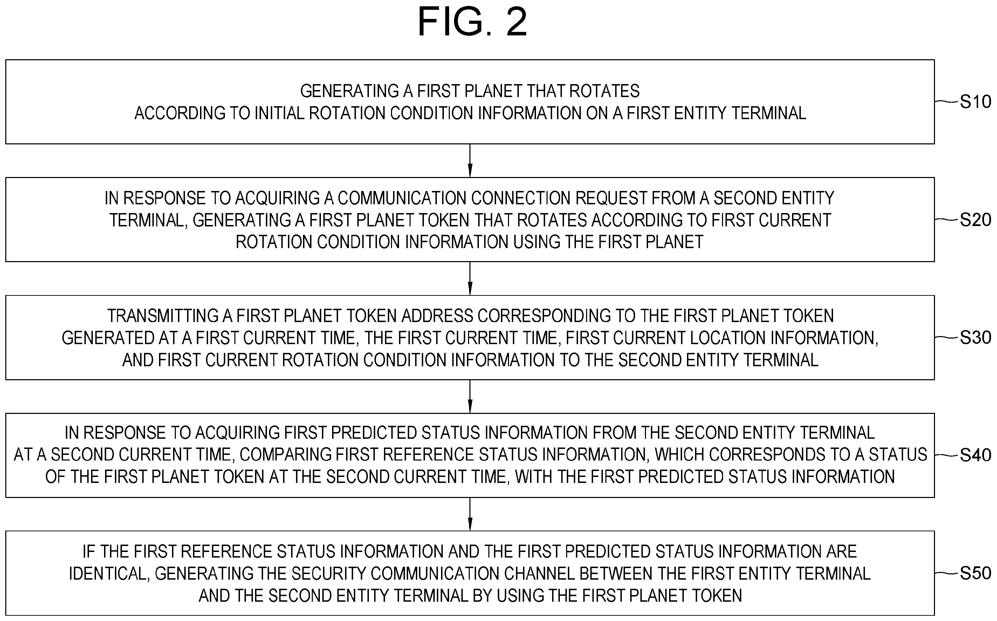

The method for security communication using the planet of the entity terminal in accordance with one example embodiment of the present disclosure configured as described above is explained by referring to Fig. 2, as follows. In the following description, the entity terminal that generates the security communication is referred to as the first entity terminal, and the another entity terminal that communicates with the entity terminal is referred to as the second entity terminal.

First, a first user using the first entity terminal 100 can generate the first planet that rotates according to the initial rotation condition information on the first entity terminal 100 at a step of S10. Herein, the first planet is a virtual planet generated by a planet service app and operating on the first entity terminal 100. The first planet may be displayed on the display of the first entity terminal 100 rotating in real-time according to the initial rotation condition information, or the first planet may operate in the background.

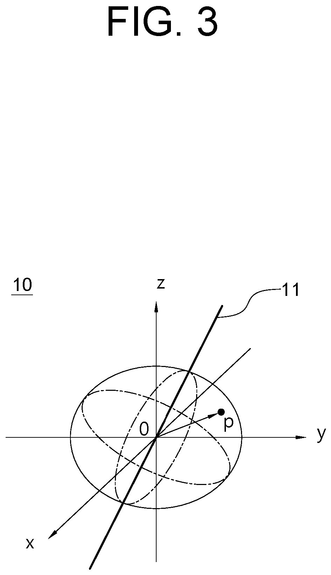

As an example, referring to Fig. 3, the planet service app installed on the first entity terminal 100 may generate the virtual planet by using a specific point p randomly selected in a spatial coordinate system, which may be a xyz coordinate system or a spherical coordinate system, in response to a planet generation request signal. Herein, when randomly generating the specific point p, the planet service app may select the specific point p such that the distance from the center of the spatial coordinate system to the specific point p, i.e., a radius of the virtual planet, to have a predetermined radius. Alternatively, when using the first planet as a storage for data, the specific point p may be randomly selected to correspond to a specific radius corresponding to a storage capacity set by the first user.

Further, the planet service app on the first entity terminal 100 may randomly select the initial axis of rotation 11 of the virtual planet.

Accordingly, the specific point p may have the initial location information including at least one of the initial longitude, the initial latitude, and the initial azimuth corresponding to the initial axis of rotation 11.

Furthermore, the planet service app on the first entity terminal 100 may randomly select the initial rotation condition information of the virtual planet, and by rotating the virtual planet around the initial axis of rotation according to the initial rotation condition information, the planet service app may generate the first planet 10 that rotates in real-time according to the initial rotation condition information.

In this case, the initial rotation condition information may include at least one of first rotation condition information and second rotation condition information. Herein, the first rotation condition information is related to a horizontal direction of rotation of the virtual planet which rotates around the initial axis of rotation 11. Further, the second rotation condition information is related to a vertical direction which is perpendicular to the horizontal direction. Herein, the horizontal direction may mean a direction corresponding to a trajectory of rotation around the axis of rotation.

As an example, the first rotation condition information and the second rotation condition information may be set as the condition of rotating 3 degrees horizontally and 5 degrees vertically over a period of 1 second, but the present disclosure is not limited thereto. The first rotation condition information and the second rotation condition information may be set randomly to rotate the virtual planet in various ways. Herein, the condition of rotating 3 degrees horizontally and 5 degrees vertically over a period of 1 second may refer to the concept of rotating discontinuously at 1-second intervals or the concept of rotating continuously.

Also, the first planet address may be set for the first planet 10. Herein, the first planet address may be generated by referring to the initial time when the first planet was generated and initial location information that includes at least one of the initial longitude, the initial latitude, and the initial azimuth of the specific point p corresponding to the initial axis of rotation for the first planet at the initial time.

Herein, the first planet address may be generated by applying a hashing operation to the initial time and the initial location information. However, the present disclosure is not limited thereto, and the first planet address may also be generated by various methods that generate a unique value from the initial time and the initial location information.

As an example, if the initial time at which the first planet was generated is "1696320000" and the initial latitude, initial longitude, and initial azimuth of the specific point p are "126.9784 degrees", "37.5667 degrees" and "82.8568 degrees" respectively, the first planet address can be expressed as follows:
The first planet address = hash(1696320000 + 126.9784° + 37.5667° + 82.8568°)

In this case, the initial time "1696320000" corresponds to a Unix time of "October 3, 2023, 17:00:00 UTC+0900 / Korean Standard Time". Unix time may be an integer representing the elapsed time in seconds since January 1, 1970, 00:00:00 Universal Time Coordinated (UTC).

Accordingly, the first planet 10 having the first planet address as its unique identifying information and rotating in real-time according to the initial rotation condition information may be generated on the first entity terminal 100.

Herein, the first entity terminal 100 may set an active time of the first planet 10, and may also allow the first planet 10 to be expired when the set active time has elapsed.

Also, the first entity terminal 100 may store at least one of the initial time, information on initial axis of rotation, and the initial location information related to the generation of the first planet 10. For example, the first entity terminal 100 may store information related to the generation of the first planet 10 in a Secure Element (SE).

Meanwhile, while the above description explains the generation of the first planet 10 on the first entity terminal 100, through the same method, each user utilizing the planet service may generate their own planets on their respective entity terminals, having their own planet addresses and rotating in real-time according to their respective rotation condition information.

Referring again to Fig. 2, in response to acquiring the communication connection request from the second entity terminal, the first entity terminal 100 may generate the first planet token that rotates according to the first current rotation condition information by using the first planet at a step of S20.

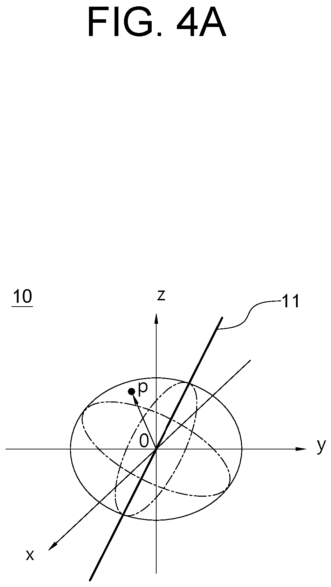

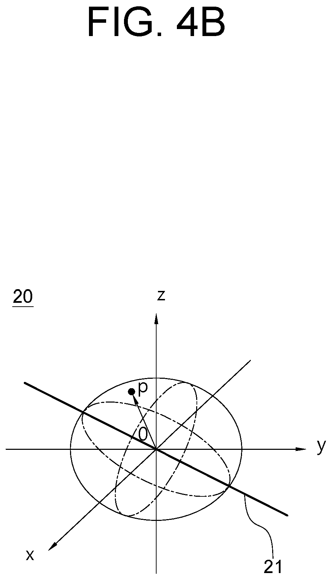

For example, referring to Figs. 4A and 4B, while the first planet 10 is rotating in real-time based on the initial axis of rotation 11 according to the initial rotation condition information, and a posture of the first planet 10 is acquired at the first current time when the communication connection request is acquired as shown in Fig. 4A, the initial axis of rotation 11 may be changed to the first current axis of rotation 21 randomly selected, to thereby generate a first planet token 20 as shown in Fig. 4B.

Then, the specific point p may have the first current location information that includes at least one of the first current longitude, the first current latitude, and the first current azimuth corresponding to the first current axis of rotation 21.

In addition, the first entity terminal 100 may randomly select the first current rotation condition information of the first planet token 20 and allow the first planet token 20 to rotate according to the first current rotation condition information around the first current axis of rotation 21.

In this case, the first current rotation condition information may include at least one of first rotation condition information and second rotation condition information. Herein, the first rotation condition information is related to a horizontal direction of rotation of the first planet token 20 which rotates around the first current axis of rotation 21. Further, the second rotation condition information is related to a vertical direction which is perpendicular to the horizontal direction.

As an example, the first rotation condition information and the second rotation condition information may be set as the condition of rotating 10 degrees horizontally and 20 degrees vertically over a period of 1 second, but the present disclosure is not limited thereto. The first rotation condition information and the second rotation condition information may be set randomly to allow the first planet token 20 to rotate in various ways.

Also, the first planet token address may be set for the first planet token 20. Herein, the first planet token address may be generated by referring to the first current time when the first planet token 20 was generated and the first current location information that includes at least one of the first current longitude, the first current latitude, and the first current azimuth of the specific point p corresponding to the first current axis of rotation for the first planet token at the firs current time.

Herein, the first planet token address may be generated by applying a hashing operation to the first current time and the first current location information. However, the present disclosure is not limited thereto, and the first planet token address may also be generated by various methods that generate a unique value from the first current time and the first current location information. Also, the first current time may be Unix time but the present disclosure is not limited thereto. The first current time may be a standard time commonly used on all of the entity terminals using the planet service.

Accordingly, the first planet token 20 having the first planet token address as its unique identifying information and rotating in real-time according to the first current rotation condition information may be generated on the first entity terminal 100.

Herein, the first entity terminal 100 may set an active time of the first planet token 20, and may also allow the first planet token 20 to be expired when the set active time has elapsed.

Also, the first entity terminal 100 may store at least one of the first current time, information on the first current axis of rotation, and the first current location information related to the generation of the first planet token 20. For example, the first entity terminal 100 may store information related to the generation of the first planet token 20 in Secure Elements (SE).

Referring again to Fig. 2, the first entity terminal 100 may transmit the first planet token address corresponding to the first planet token generated at the first current time, the first current time, the first current location information, and the first current rotation condition information to the second entity terminal at a step of S30.

Then, the second entity terminal may acquire the first predicted status information at a second current time. Herein, the second current time is when the first planet token address is used for accessing the first planet token. Further, the first predicted status information is acquired by (i) obtaining the first current time, the first current location information and the first current rotation condition information from the first entity terminal 100 and (ii) predicting a rotated status of the first planet token according to the first current rotation condition information during a time period from the first current time to the second current time. In this case, the first predicted status information is used as a security key for security communication, and the security key may use the location information of the first planet token that changes in real-time as a key value. Further, the second current time may be Unix time, but the present disclosure is not limited thereto and the second current time may be a standard time commonly used by all entity terminals utilizing the planet service.

For example, the second entity terminal may generate the first predicted status information including the second predicted hash value. Herein, the second predicted hash value is acquired by applying a hashing operation to the second current time and second predicted current location information, wherein the second predicted current location information contains at least one of a second predicted current longitude, a second predicted current latitude and a second predicted current azimuth corresponding to the specific point of the first planet token rotated according to the first current rotation condition information during a time period from the first current time to the second current time.

Also, the second entity terminal may transmit the first predicted status information to the first entity terminal 100 by using the first planet address.

Subsequently, in response to acquiring the first predicted status information from the second entity terminal at a second current time, the first entity terminal 100 may compare the first reference status information, which corresponds to a status of the first planet token at the second current time, with the first predicted status information at a step of S40.

For example, the first entity terminal 100 may generate a second reference hash value. Herein, the second reference hash value is acquired by applying a hashing operation to the second current time and second reference current location information, wherein the second reference current location information contains at least one of a second reference current longitude, a second reference current latitude and a second reference current azimuth corresponding to the specific point of the first planet token at the second current time. Also, the first entity terminal 100 may compare the second reference hash value and the second predicted hash value acquired from the second entity terminal.

In addition, if the first reference status information and the first predicted status information are identical, the first entity terminal 100 may use the first planet token to generate the security communication channel between the first entity terminal and the second entity terminal (S50).

Herein, the first entity terminal 100 may generate the security communication channel with the second entity terminal through a peer-to-peer network. However, the present disclosure is not limited thereto, and various communication methods for generating the security communication channel may be applied.

Meanwhile, in case the first planet token is expired or deleted before the active time has elapsed, for example in case the first entity terminal is turned off etc., the first entity terminal 100 may use the first planet to regenerate the first planet token.

That is, if the first planet token is expired before the active time has elapsed, the first entity terminal may generate the first planet token corresponding to the first current time, the first current location information and the first current rotation condition information from the first planet at a third current time, and then allow the first planet token to rotate according to the first current rotation condition information during a time period from the first current time to the third current time to thereby regenerate and store the first planet token.

For example, at the third current time when the first planet token is to be regenerated, referring to a state of the first planet at the first current time when the first planet token is generated, the first entity terminal 100 may (i) generate the first planet token by changing the initial axis of rotation of the first planet to the first current axis of rotation set at a time when the first planet token was generated, (ii) allow the first planet token to rotate around the first current axis of rotation during a time period from the first current time to the third current time according to the first current rotation condition information set at a time when the first token was generated, to thereby allow the first planet token to be synchronized with the third current time, and (iii) allow the first planet token synchronized at the third current time to rotate according to the first current rotation condition information around the first current axis of rotation, to thereby regenerate the first planet token.

Also, in response to acquiring validity check request information of the first planet token at a fourth current time, the first entity terminal 100 may (i) generate a first reference planet token corresponding to the first current time, the first current location information and the first current rotation condition information from the first planet, and then (ii) check whether the first reference planet token that is acquired by rotating the first reference planet token according to the first current rotation condition information during a time period from the first current time to the fourth current time and the first planet token stored at the fourth current time are identical, to thereby check a validity of the first planet token. In other words, the entity terminal 100 may verify the validity of the first planet token by checking whether the location information of the first reference planet token is identical to the location information of the first planet token corresponding to the fourth current time.

On the other hand, in response to acquiring validity check request information of the first planet token at the fourth current time, the first entity terminal 100 may (i) generate a first reference planet token corresponding to the first current time, the first current location information and the first current rotation condition information from the first planet, and (ii) check whether the location information of the first planet token reverse-rotated from the fourth current time to the first current time according to the first current rotation condition information is identical to the location information of the first reference planet token, to thereby check a validity of the first planet token.

Using this method, the present disclosure may utilize the location information of the planet that is rotating in real-time after a specific time as a security key, to thereby simplify the process of sharing the security key and provide the security communication channels between the entity terminals that fundamentally blocks hacking.

Meanwhile, while the above description explains the first entity terminal 100 generating the first planet token in response to acquiring the communication connection request from the second entity terminal, conversely, the first entity terminal 100 may generate the security communication channel in response to acquiring the communication connection request from the second entity terminal, while the first planet token is already generated.

That is, in a state that the first entity terminal 100 has generated and stored the first planet token at the first current time, in response to acquiring the communication connection request from the second entity terminal, the first entity terminal 100 transmits information related to the generation of the first planet token at the first current time to the second entity terminal, and in response to acquiring the first predicted status information corresponding to the first planet token at the second current time from the second entity terminal by using the information related to a generation of the first planet token, the first entity terminal 100 may check whether the first reference status information and the first predicted status information are identical to thereby generate the security communication channel between the first entity terminal and the second entity terminal by using the first planet token.

Also, although the first entity terminal 100 generated the security communication channel with the single second entity terminal by using the first planet token in the description above, the first entity terminal 100 may also generate security communication channels with multiple other entity terminals by using the first planet token.

As an example, if the first entity terminal 100 intends to share data with a plurality of authorized other entity terminals, the first entity terminal 100 generates a first planet token at a first current time, then transmits information related to the generation of the first planet token at the first current time to the authorized other entity terminals, and in response to acquiring the first predicted status information corresponding to the first planet token at the second current time from each of the authorized other entity terminals by using the information related to a generation of the first planet token, the first entity terminal 100 checks whether each of the first predicted status information is identical to the first reference status information, and the first entity terminal 100 may allow access to the data for those other entity terminals with the first predicted status information identical to the first reference status information. Herein, if a specific first predicted status information is hacked by a third party, the third party may attempt to access the data by using hacked first predicted status information. However, the location information which is a key value of the first planet token at the specific time when the third party attempts to access the data by using the hacked first predicted status information will differ from the location information of the first planet token at the second current time corresponding to the first predicted status information. Consequently, the third party will not be able to access the data by using the hacked first predicted status information.

Meanwhile, although the security communication channel between the first entity terminal and the second entity terminal was generated by using the first planet token generated by the first entity terminal in the description above, in contrast, the security communication channel between the first entity terminal and the second entity terminal may also be generated by using both the first planet token generated by the first entity terminal and the second planet token generated by the second entity terminal. A brief explanation of this is as follows. In the following description, detailed explanations will be omitted for those parts that can be easily understood by referring to the description in Fig. 2.

First, in response to acquiring the communication connection request from the second entity terminal, the first entity terminal 100 may change the initial axis of rotation for the first planet to the first current axis of rotation for the first planet, randomly selected at a (1_1)-th current time when the communication connection request is acquired, by referring to the first planet stored in the first entity terminal, to thereby allow the first planet to rotate according to (1_1)-th current rotation condition information which is randomly selected based on the first current axis of rotation for the first planet, may generate and store the first planet token having a (1_1)-th planet token address generated by referring to the (1_1)-th current time and (1_1)-th current location information which includes at least one of a (1_1)-th current longitude, a (1_1)-th current latitude, and a (1_1)-th current azimuth of the specific point corresponding to the first current axis of rotation for the first planet at the (1_1)-th current time, and may transmit the (1_1)-th planet token address, the (1_1)-th current time, the (1_1)-th current location information and the (1_1)-th current rotation condition information to the second entity terminal.

Then, the first entity terminal 100 may acquire (1_1)-th predicted status information from the second entity terminal at a (2_1)-th current time, wherein the (2_1)-th current time is when the (1_1)-th planet token address is used for accessing the first planet token, and wherein the (1_1)-th predicted status information is acquired based on the (1_1)-th current time, the (1_1)-th current location information and the (1_1)-th current rotation condition information by predicting a rotated status of the first planet token according to the (1_1)-th current rotation condition information during a time period from the (1_1)-th current time to the (2_1)-th current time.

Subsequently, the first entity terminal 100 may compare (1_1)-th reference status information with the (1_1)-th predicted status information, wherein the (1_1)-th reference status information corresponds to a status of the first planet token at the (2_1)-th current time, and in case the (1_1)-th reference status information and the (1_1)-th predicted status information are identical, the first entity terminal may request the communication connection to the second entity terminal.

Also, in response to acquiring a (1_2)-th planet token address, a (1_2)-th current time, (1_2)-th current location information and (1_2)-th current rotation condition information corresponding to the second planet token from the second entity terminal, the first entity terminal 100 may generate the (1_2)-th predicted status information by predicting a rotated status of the second planet token according to the (1_2)-th current rotation condition information during a time period from the (1_2)-th current time to the (2_2)-th current time by referring to the (1_2)-th current time, the (1_2)-th current location information and the (1_2)-th current rotation condition information at the (2_2)-th current time, and transmit the (1_2)-th predicted status information to the second entity terminal by using the (1_2)-th planet token address

Then, the second entity terminal may compare (1_2)-th reference status information with the (1_2)-th predicted status information, wherein the (1_2)-th reference status information corresponds to a status of the second planet token at the (2_2)-th current time.

Consequently, in case the second entity terminal checks the (1_2)-th reference status information and the (1_2)-th predicted status information as identical, the first entity terminal 100 may generate the security communication channel between the first entity terminal and the second entity terminal by using the first planet token and the second planet token.

Besides, the embodiments of the present disclosure as explained above can be implemented in a form of executable program command through a variety of computer means recordable to computer readable media. The computer readable media may store solely or in combination, program commands, data files, and data structures. The program commands recorded in the media may be components specially designed for the present disclosure or may be usable for a skilled human in a field of computer software. The computer readable media include, but are not limited to, magnetic media such as hard drives, floppy diskettes, magnetic tapes, memory cards, solid-state drives, USB flash drives, optical media such as CD-ROM and DVD, magneto-optical media such as floptical diskettes and hardware devices such as a read-only memory (ROM), a random access memory (RAM), and a flash memory specially designed to store and carry out program commands. Program commands may include not only a machine language code made by a compiler but also a high level code that can be used by an interpreter etc., which is executed by a computer. The aforementioned hardware device may work as more than a software module to perform the action of the present disclosure and they may do the same in the opposite case.

As seen above, the present disclosure has been explained by specific matters such as detailed components, limited embodiments, and drawings. While the invention has been shown and described with respect to the preferred embodiments, it, however, will be understood by those skilled in the art that various changes and modification may be made without departing from the spirit and scope of the invention as defined in the following claims.

Accordingly, the thought of the present disclosure must not be confined to the explained embodiments, and the following patent claims as well as everything including variations equal or equivalent to the patent claims pertain to the category of the thought of the present disclosure.

### DESCRIPTION OF REFERENCE NUMBERS

100: Entity terminal
101: Memory
102: Processor

## Claims

1. A method for security communication using a planet, comprising steps of:
(a) in response to acquiring a communication connection request from a second entity terminal, (i) checking, by a first entity terminal, a first planet stored in the first terminal, wherein the first planet is generated by using a specific point that is randomly selected from a spatial coordinate system, wherein the first planet rotates according to initial rotation condition information that is randomly selected based on an initial axis of rotation for the first planet randomly selected from the spatial coordinate system, wherein a first planet address set for the first planet is generated by referring to an initial time when the first planet was generated and initial location information that includes at least one of an initial longitude, an initial latitude, and an initial azimuth of the specific point corresponding to the initial axis of rotation for the first planet at the initial time, (ii) changing, by the first entity terminal, the initial axis of rotation for the first planet to a first current axis of rotation for the first planet, randomly selected at a first current time when the communication connection request is acquired, by referring to the first planet stored in the first entity terminal, to thereby allow the first planet to rotate according to first current rotation condition information which is randomly selected based on the first current axis of rotation for the first planet, (iii) generating and storing, by the first entity terminal, a first planet token having a first planet token address generated by referring to the first current time and first current location information which includes at least one of a first current longitude, a first current latitude, and a first current azimuth of the specific point corresponding to the first current axis of rotation for the first planet at the first current time, and (iv) transmitting, by the first entity terminal, the first planet token address, the first current time, the first current location information and the first current rotation condition information to the second entity terminal; and
(b) in response to acquiring first predicted status information from the second entity terminal at a second current time, wherein the second current time is when the first planet token address is used for accessing the first planet token, and wherein the first predicted status information is acquired based on the first current time, the first current location information and the first current rotation condition information by predicting a rotated status of the first planet token according to the first current rotation condition information during a time period from the first current time to the second current time, (i) comparing, by the first entity terminal, first reference status information with the first predicted status information, wherein the first reference status information corresponds to a status of the first planet token at the second current time, and (ii) in case the first reference status information and the first predicted status information are identical, generating, by the first entity terminal, a security communication channel between the first entity terminal and the second entity terminal by using the first planet token.

2. The method of Claim 1, wherein, at the step of (b), the first predicted status information includes a second predicted hash value, wherein the second predicted hash value is acquired by applying a hashing operation to the second current time and second predicted current location information, and wherein the second predicted current location information contains at least one of a second predicted current longitude, a second predicted current latitude and a second predicted current azimuth corresponding to the specific point of the first planet token rotated according to the first current rotation condition information during a time period from the first current time to the second current time,
wherein the first entity terminal (i) generates a second reference hash value, wherein the second reference hash value is acquired by applying a hashing operation to the second current time and second reference current location information, and wherein the second reference current location information contains at least one of a second reference current longitude, a second reference current latitude and a second reference current azimuth corresponding to the specific point of the first planet token at the second current time, and (ii) in case the second reference hash value and the second predicted hash value are identical, generates the security communication channel between the first entity terminal and the second entity terminal.

3. The method of Claim 1, wherein, the initial time, the first current time and the second current time are respectively acquired from a Unix time, wherein the Unix time is an integer representing an elapsed time in seconds since January 1, 1970, 00:00:00 Universal Time Coordinated (UTC).

4. The method of Claim 1, wherein, at the step of (a), the first entity terminal generates the first planet token with an active time set, and allows the first planet token to be expired when the active time has elapsed.

5. The method of Claim 4, further comprising a step of:
(c) in case the first planet token is expired before the active time has elapsed, generating, by the first entity terminal, the first planet token corresponding to the first current time, the first current location information and the first current rotation condition information from the first planet at a third current time, and then allowing the first planet token to rotate according to the first current rotation condition information during a time period from the first current time to the third current time to thereby regenerate and store the first planet token.

6. The method of Claim 1, further comprising a step of:
(d) in response to acquiring validity check request information of the first planet token at a fourth current time, generating, by the first entity terminal, a first reference planet token corresponding to the first current time, the first current location information and the first current rotation condition information from the first planet, and then checking, by the first entity terminal, whether the first reference planet token that is acquired by rotating the first reference planet token according to the first current rotation condition information during a time period from the first current time to the fourth current time and the first planet token stored at the fourth current time are identical, to thereby check a validity of the first planet token.

7. The method of Claim 1, wherein, the initial rotation condition information or the first current rotation condition information respectively includes at least one of first rotation condition information and second rotation condition information, wherein the first rotation condition information is related to a horizontal direction of rotation for the first planet or the first planet token, wherein the first planet or the first planet token rotates around the initial axis of rotation for the first planet or around the first current axis of rotation for the first planet token, and wherein the second rotation condition information is related to a vertical direction perpendicular to the horizontal direction.

8. The method of Claim 1, wherein, the first entity terminal generates the security communication channel between the first entity terminal and the second entity terminal through a peer-to-peer network.

9. A method for security communication using a planet, comprising steps of:
(a) in response to acquiring a communication connection request from a second entity terminal, (i) checking, by a first entity terminal, a first planet stored in the first terminal, wherein the first planet is generated by using a specific point that is randomly selected from a spatial coordinate system, wherein the first planet rotates according to initial rotation condition information that is randomly selected based on an initial axis of rotation for the first planet randomly selected from the spatial coordinate system, wherein a first planet address set for the first planet is generated by referring to an initial time when the first planet was generated and initial location information that includes at least one of an initial longitude, an initial latitude, and an initial azimuth of the specific point corresponding to the initial axis of rotation for the first planet at the initial time, (ii) changing, by the first entity terminal, the initial axis of rotation for the first planet to a first current axis of rotation for the first planet, randomly selected at a (1_1)-th current time when the communication connection request is acquired, by referring to the first planet stored in the first entity terminal, to thereby allow the first planet to rotate according to (1_1)-th current rotation condition information which is randomly selected based on the first current axis of rotation for the first planet, (iii) generating and storing, by the first entity terminal, a first planet token having a (1_1)-th planet token address generated by referring to the (1_1)-th current time and (1_1)-th current location information which includes at least one of a (1_1)-th current longitude, a (1_1)-th current latitude, and a (1_1)-th current azimuth of the specific point corresponding to the first current axis of rotation for the first planet at the (1_1)-th current time, and (iv) transmitting, by the first entity terminal, the (1_1)-th planet token address, the (1_1)-th current time, the (1_1)-th current location information and the (1_1)-th current rotation condition information to the second entity terminal;
(b) in response to acquiring (1_1)-th predicted status information from the second entity terminal at a (2_1)-th current time, wherein the (2_1)-th current time is when the (1_1)-th planet token address is used for accessing the first planet token, and wherein the (1_1)-th predicted status information is acquired based on the (1_1)-th current time, the (1_1)-th current location information and the (1_1)-th current rotation condition information by predicting a rotated status of the first planet token according to the (1_1)-th current rotation condition information during a time period from the (1_1)-th current time to the (2_1)-th current time, (i) comparing, by the first entity terminal, (1_1)-th reference status information with the (1_1)-th predicted status information, wherein the (1_1)-th reference status information corresponds to a status of the first planet token at the (2_1)-th current time, and (ii) in case the (1_1)-th reference status information and the (1_1)-th predicted status information are identical, requesting, by the first entity terminal, a communication connection to the second entity terminal; and
(c) in response to acquiring a (1_2)-th planet token address, a (1_2)-th current time, (1_2)-th current location information and (1_2)-th current rotation condition information corresponding to a second planet token from the second entity terminal, (i) generating, by the first entity terminal, (1_2)-th predicted status information by predicting a rotated status of the second planet token according to the (1_2)-th current rotation condition information during a time period from the (1_2)-th current time to the (2_2)-th current time by referring to the (1_2)-th current time, the (1_2)-th current location information and the (1_2)-th current rotation condition information at the (2_2)-th current time, (ii) transmitting, by the first entity terminal, the (1_2)-th predicted status information to the second entity terminal by using the (1_2)-th planet token address, to thereby allow the second entity terminal to compare (1_2)-th reference status information with the (1_2)-th predicted status information, wherein the (1_2)-th reference status information corresponds to a status of the second planet token at the (2_2)-th current time, and to check whether the (1_2)-th reference status information and the (1_2)-th predicted status information are identical, and (iii) in case the (1_2)-th reference status information and the (1_2)-th predicted status information are checked as identical on the second entity terminal, generating, by the first entity terminal, a security communication channel between the first entity terminal and the second entity terminal by using the first planet token and the second planet token.

10. The method of Claim 9, wherein, at the step of (b), the (1_1)-th predicted status information includes a second predicted hash value, wherein the second predicted hash value is acquired by applying a hashing operation to the (2_1)-th current time and second predicted current location information, and wherein the second predicted current location information contains at least one of a second predicted current longitude, a second predicted current latitude and a second predicted current azimuth corresponding to the specific point of the first planet token rotated according to the (1_1)-th current rotation condition information during a time period from the (1_1)-th current time to the (2_1)-th current time,
wherein the first entity terminal (i) generates a second reference hash value, wherein the second reference hash value is acquired by applying a hashing operation to the (2_1)-th current time and second reference current location information, and wherein the second reference current location information contains at least one of a second reference current longitude, a second reference current latitude and a second reference current azimuth corresponding to the specific point of the first planet token at the (2_1)-th current time, and (ii) checks whether the (1_1)-th reference status information and the (1_1)-th predicted status information are identical by checking whether the second reference hash value and the second predicted hash value are identical.

11. The method of Claim 9, wherein, the initial rotation condition information or the (1_1)-th current rotation condition information respectively includes at least one of first rotation condition information and second rotation condition information, wherein the first rotation condition information is related to a horizontal direction of rotation for the first planet or the first planet token, wherein the first planet or the first planet token rotates around the initial axis of rotation for the first planet or around the first current axis of rotation for the first planet token and wherein the second rotation condition information is related to a vertical direction perpendicular to the horizontal direction.

12. An entity terminal for executing security communication using a planet, comprising:
at least one memory that stores instructions for executing the security communication using the planet; and
at least one processor configured to execute the security communication using the planet according to the instructions stored in the memory to perform processes of: (I) in response to acquiring a communication connection request from another entity terminal, (i) checking a first planet stored in the first terminal, wherein the first planet is generated by using a specific point that is randomly selected from a spatial coordinate system, wherein the first planet rotates according to initial rotation condition information that is randomly selected based on an initial axis of rotation for the first planet randomly selected from the spatial coordinate system, wherein a first planet address set for the first planet is generated by referring to an initial time when the first planet was generated and initial location information that includes at least one of an initial longitude, an initial latitude, and an initial azimuth of the specific point corresponding to the initial axis of rotation for the first planet at the initial time, (ii) changing the initial axis of rotation for the first planet to a first current axis of rotation for the first planet, randomly selected at a first current time when the communication connection request is acquired, by referring to the first planet stored in the entity terminal, to thereby allow the first planet to rotate according to first current rotation condition information which is randomly selected based on the first current axis of rotation for the first planet, (iii) generating and storing a first planet token having a first planet token address generated by referring to the first current time and first current location information which includes at least one of a first current longitude, a first current latitude, and a first current azimuth of the specific point corresponding to the first current axis of rotation for the first planet at the first current time, and (iv) transmitting the first planet token address, the first current time, the first current location information and the first current rotation condition information to the another entity terminal; and (II) in response to acquiring first predicted status information from the another entity terminal at a second current time, wherein the second current time is when the first planet token address is used for accessing the first planet token, and wherein the first predicted status information is acquired based on the first current time, the first current location information and the first current rotation condition information by predicting a rotated status of the first planet token according to the first current rotation condition information during a time period from the first current time to the second current time, (i) comparing first reference status information with the first predicted status information, wherein the first reference status information corresponds to a status of the first planet token at the second current time, and (ii) in case the first reference status information and the first predicted status information are identical, generating a security communication channel between the entity terminal and the another entity terminal by using the first planet token.

13. The entity terminal of Claim 12, wherein the first predicted status information includes a second predicted hash value, wherein the second predicted hash value is acquired by applying a hashing operation to the second current time and second predicted current location information, and wherein the second predicted current location information contains at least one of a second predicted current longitude, a second predicted current latitude and a second predicted current azimuth corresponding to the specific point of the first planet token rotated according to the first current rotation condition information during a time period from the first current time to the second current time,
wherein, at the process of (II), the processor (i) generates a second reference hash value, wherein the second reference hash value is acquired by applying a hashing operation to the second current time and second reference current location information, and wherein the second reference current location information contains at least one of a second reference current longitude, a second reference current latitude and a second reference current azimuth corresponding to the specific point of the first planet token at the second current time, and (ii) in case the second reference hash value and the second predicted hash value are identical, generates the security communication channel between the entity terminal and the another entity terminal.

14. The entity terminal of Claim 12, wherein, the initial time, the first current time and the second current time are respectively acquired from a Unix time, wherein the Unix time is an integer representing an elapsed time in seconds since January 1, 1970, 00:00:00 Universal Time Coordinated (UTC).

15. The entity terminal of Claim 12, wherein, at the process of (I), the processor generates the first planet token with an active time set, and allows the first planet token to be expired when the active time has elapsed.

16. The entity terminal of Claim 15, further executing a process of: (III) in case the first planet token is expired before the active time has elapsed, generating the first planet token corresponding to the first current time, the first current location information and the first current rotation condition information from the first planet at a third current time, and then allowing the first planet token to rotate according to the first current rotation condition information during a time period from the first current time to the third current time to thereby regenerate and store the first planet token.

17. The entity terminal of Claim 12, further executing a process of: (IV) in response to acquiring validity check request information of the first planet token at a fourth current time, generating a first reference planet token corresponding to the first current time, the first current location information and the first current rotation condition information from the first planet, and then checking whether the first reference planet token that is acquired by rotating the first reference planet token according to the first current rotation condition information during a time period from the first current time to the fourth current time and the first planet token stored at the fourth current time are identical, to thereby check a validity of the first planet token.

18. The entity terminal of Claim 12, wherein, the initial rotation condition information or the first current rotation condition information respectively includes at least one of first rotation condition information and second rotation condition information, wherein the first rotation condition information is related to a horizontal direction of rotation for the first planet or the first planet token, wherein the first planet or the first planet token rotates around the initial axis of rotation for the first planet or around the first current axis of rotation for the first planet token, and wherein the second rotation condition information is related to a vertical direction perpendicular to the horizontal direction.

19. The entity terminal of Claim 12, wherein, the processor generates the security communication channel between the entity terminal and the another entity terminal through a peer-to-peer network.

20. An entity terminal for executing security communication using a planet, comprising:
at least one memory that stores instructions for executing the security communication using the planet; and
at least one processor configured to execute the security communication using the planet according to the instructions stored in the memory to perform processes of: (I) in response to acquiring a communication connection request from an another entity terminal, (i) checking a first planet stored in the first terminal, wherein the first planet is generated by using a specific point that is randomly selected from a spatial coordinate system, wherein the first planet rotates according to initial rotation condition information that is randomly selected based on an initial axis of rotation for the first planet randomly selected from the spatial coordinate system, wherein a first planet address set for the first planet is generated by referring to an initial time when the first planet was generated and initial location information that includes at least one of an initial longitude, an initial latitude, and an initial azimuth of the specific point corresponding to the initial axis of rotation for the first planet at the initial time, (ii) changing the initial axis of rotation for the first planet to a first current axis of rotation for the first planet, randomly selected at a (1_1)-th current time when the communication connection request is acquired, by referring to the first planet stored in the entity terminal, to thereby allow the first planet to rotate according to (1_1)-th current rotation condition information which is randomly selected based on the first current axis of rotation for the first planet, (iii) generating and storing a first planet token having a (1_1)-th planet token address generated by referring to the (1_1)-th current time and (1_1)-th current location information which includes at least one of a (1_1)-th current longitude, a (1_1)-th current latitude, and a (1_1)-th current azimuth of the specific point corresponding to the first current axis of rotation for the first planet at the (1_1)-th current time, and (iv) transmitting the (1_1)-th planet token address, the (1_1)-th current time, the (1_1)-th current location information and the (1_1)-th current rotation condition information to the another entity terminal; (II) in response to acquiring (1_1)-th predicted status information from the another entity terminal at a (2_1)-th current time, wherein the (2_1)-th current time is when the (1_1)-th planet token address is used for accessing the first planet token, and wherein the (1_1)-th predicted status information is acquired based on the (1_1)-th current time, the (1_1)-th current location information and the (1_1)-th current rotation condition information by predicting a rotated status of the first planet token according to the (1_1)-th current rotation condition information during a time period from the (1_1)-th current time to the (2_1)-th current time, (i) comparing (1_1)-th reference status information with the (1_1)-th predicted status information, wherein the (1_1)-th reference status information corresponds to a status of the first planet token at the (2_1)-th current time, and (ii) in case the (1_1)-th reference status information and the (1_1)-th predicted status information are identical, requesting a communication connection to the another entity terminal; and (III) in response to acquiring a (1_2)-th planet token address, a (1_2)-th current time, (1_2)-th current location information and (1_2)-th current rotation condition information corresponding to a second planet token, (i) generating (1_2)-th predicted status information by predicting a rotated status of the second planet token according to the (1_2)-th current rotation condition information during a time period from the (1_2)-th current time to the (2_2)-th current time by referring to the (1_2)-th current time, the (1_2)-th current location information and the (1_2)-th current rotation condition information at the (2_2)-th current time, (ii) transmitting the (1_2)-th predicted status information to the another entity terminal by using the (1_2)-th planet token address, to thereby allow the another entity terminal to compare (1_2)-th reference status information with the (1_2)-th predicted status information, wherein the (1_2)-th reference status information corresponds to a status of the second planet token at the (2_2)-th current time, and to check whether the (1_2)-th reference status information and the (1_2)-th predicted status information are identical, and (iii) in case the (1_2)-th reference status information and the (1_2)-th predicted status information are checked as identical on the another entity terminal, generating a security communication channel between the entity terminal and the another entity terminal by using the first planet token and the second planet token.

21. The entity terminal of Claim 20, wherein the (1_1)-th predicted status information includes a second predicted hash value, wherein the second predicted hash value is acquired by applying a hashing operation to the (2_1)-th current time and second predicted current location information, and wherein the second predicted current location information contains at least one of a second predicted current longitude, a second predicted current latitude and a second predicted current azimuth corresponding to the specific point of the first planet token rotated according to the (1_1)-th current rotation condition information during a time period from the (1_1)-th current time to the (2_1)-th current time,
wherein, at the process of (II), the processor (i) generates a second reference hash value, wherein the second reference hash value is acquired by applying a hashing operation to the (2_1)-th current time and second reference current location information, and wherein the second reference current location information contains at least one of a second reference current longitude, a second reference current latitude and a second reference current azimuth corresponding to the specific point of the first planet token at the (2_1)-th current time, and (ii) checks whether the (1_1)-th reference status information and the (1_1)-th predicted status information are identical by checking whether the second reference hash value and the second predicted hash value are identical.

22. The entity terminal of Claim 20, wherein, the initial rotation condition information or the (1_1)-th current rotation condition information respectively includes at least one of first rotation condition information and second rotation condition information, wherein the first rotation condition information is related to a horizontal direction of rotation for the first planet or the first planet token, wherein the first planet or the first planet token rotates around the initial axis of rotation for the first planet or around the first current axis of rotation for the first planet token and wherein the second rotation condition information is related to a vertical direction perpendicular to the horizontal direction.
